# DEMANDE DE BREVET EUROPEEN

(11) **EP 3 272 579 A1**
(43) Date de publication de la demande: **24.01.2018**
(21) Numéro de dépôt: 17181190.4
(22) Date de dépôt: 13.07.2017
(51) Int. Cl.: B60P 1/26

(54) **PORTE DE BENNE PENDULAIRE**

(30) Priorité: 19.07.2016 FR 1656866
(71) Demandeur: Ur'ben, 12800 Naucelle (FR)
(72) Inventeur: FLOTTES, Laurent, 12120 MELJAC (FR); CAVALLARI, Philippe, 81000 ALBI (FR); GAFFARD, Benjamin, 12000 RODEZ (FR)
(74) Mandataire: Cabinet Plasseraud

(57) **Abrégé**

Porte (4) de benne pendulaire comportant :
- un cadre (12) en forme de U avec une base (20) et deux branches latérales (22),
- un ouvrant (10) monté articulé pivotant sur la base (20) du cadre (12), et
- des moyens de verrouillage (34) de l'ouvrant (10) sur le cadre (12).

## Description

La présente invention concerne une porte de benne pendulaire, une benne munie d'une telle porte ainsi qu'un camion avec une telle benne.

Le domaine de la présente invention est celui des véhicules (camions, camionnettes et similaires) munis d'une benne. Cette dernière permet de recevoir tout type de matériel mais aussi des matériaux en vrac (sable, gravier, terre, bois, ...).

Une benne comporte généralement un fond de forme sensiblement plane et le plus souvent globalement rectangulaire. Le fond comporte des rebords sur ses quatre côtés de manière à délimiter un espace de chargement. Certains de ces rebords sont fixes par rapport au fond et un ou plusieurs rebords, appelés alors aussi porte(s), peuvent être mobiles par rapport au fond de manière à faciliter des opérations de déchargement.

Lorsque des matériaux en vrac sont chargés sur la benne d'un camion (ou similaire), il est connu, d'une part, d'avoir une benne basculante et, d'autre part, d'avoir une porte pendulaire. La benne basculante est munie d'un dispositif de levage qui permet d'incliner le fond de la benne afin de faciliter son déchargement par gravité. Elle est avantageusement combinée à une porte pendulaire qui s'ouvre automatiquement lorsque le fond est incliné. Une telle porte pendulaire est montée pivotante autour d'un axe d'articulation correspondant sensiblement à son bord supérieur de manière à rester à la verticale lorsque la benne bascule. Une ouverture apparait alors entre le fond de la benne et la porte de benne pendulaire. La porte pendulaire se trouve bien entendu au niveau du côté inférieur du fond de la benne lorsque cette dernière est en position inclinée. Ainsi, lorsque la benne bascule, la porte pendulaire s'ouvre, d'une part, sous l'effet de la gravité et, d'autre part, sous l'action de la charge -qui subit également la gravité- qui tend à sortir de la benne.

Toutes les bennes ne sont pas munies d'une porte pendulaire. Certaines présentent quatre ridelles fixes. D'autres comportent une ou plusieurs portes qui sont montées articulées selon un axe d'articulation qui correspond sensiblement à leur bord inférieur, c'est-à-dire aussi à l'intersection entre le fond et la porte. Cette porte peut être ouverte lors d'un déchargement pour ne pas avoir à soulever la charge au-dessus du bord supérieur de la porte et faciliter ainsi le déchargement.

Le document DE 18 90 897 U montre une benne avec une porte se présentant sous la forme qui présente des articulations sur deux bords opposés si bien qu'en bloquant l'une ou l'autre des articulations, il est possible d'avoir une porte pendulaire ou une porte se rabattant vers le bas.

Le document WO 93/03949 divulgue un verrou servant à verrouiller, par exemple, un côté de plate-forme de véhicule à un étançon de ladite plate-forme et comprenant une poignée et un coulisseau accouplé à la poignée par l'intermédiaire d'une première articulation et situé à l'intérieur d'une partie creuse.

Le document US 3 230 014 divulgue un dispositif d'ouverture automatique d'une porte de camion, par exemple une benne.

Enfin, le document JP S58 211928 montre une porte de benne qui permet de réaliser plusieurs types d'ouverture. Cette porte présente une partie pendulaire qui est un volet plan, monté articulé dans un cadre rectangulaire.

L'idée à l'origine de la présente invention est d'avoir une porte de benne qui puisse s'ouvrir soit en mode automatique (pendulaire) comme expliqué plus haut pour le déchargement de matériau en vrac, soit en mode manuel en pivotant autour d'un axe d'articulation inférieur, cette porte pouvant s'adapter à des bennes sans adaptation particulière de la benne.

La présente invention a alors pour but de fournir une porte de benne pendulaire qui puisse aussi s'ouvrir en s'articulant autour d'un axe inférieur, comme une ridelle mobile et ce sans que la structure de cette porte à double ouverture ne vienne dégrader le fonctionnement dans l'un ou l'autre mode. Il convient donc d'un côté que la porte selon l'invention permette un fonctionnement en porte pendulaire comme une porte pendulaire sans créer d'obstacle au déversement du contenu d'une benne et d'un autre côté que le fonctionnement en pivotant autour d'un axe d'articulation inférieur.

Un but de la présente invention est d'obtenir une structure de porte compacte, qui est avantageusement facile à utiliser.

À cet effet, la présente invention propose une porte de benne pendulaire, caractérisée en ce qu'elle comporte :
- un cadre en forme de U avec une base et deux branches latérales,
- un ouvrant monté articulé pivotant sur la base du cadre, et
- des moyens de verrouillage de l'ouvrant sur le cadre.

Cette forme de réalisation originale permet d'obtenir une porte s'ouvrant de façon pendulaire ou bien en se rabattant vers le bas. On entend ici par porte un élément destiné à prendre place dans un bâti et mobile entre une première position dans laquelle ledit élément constitue un dispositif de fermeture d'un passage et au moins une autre position dans laquelle le passage est libéré.

Comme il s'agit d'une porte pendulaire, elle est naturellement munie de premiers moyens d'articulation destinés à coopérer avec des seconds moyens d'articulation prenant place sur le « bâti » recevant la porte. Cette articulation se fera autour d'un axe sensiblement horizontal. Habituellement, les moyens d'articulation comportent deux charnières avec chacune une partie mâle, ou axe, et une partie femelle, palier ou noeud. La porte selon l'invention comporte alors de préférence soit deux parties mâles, soit deux parties femelles. Ces éléments d'articulation viennent prendre place sur les branches latérales du cadre, de préférence au niveau de l'extrémité libre de chacune de ces branches.

Selon une forme de réalisation, le cadre d'une porte selon la présente invention est un cadre tubulaire.

Pour réaliser l'articulation de l'ouvrant sur la base du cadre, on peut utiliser par exemple au moins une, et de préférence deux, charnière(s).

On peut prévoir que les moyens de verrouillage comportent au moins un crochet monté pivotant sur l'ouvrant et coopérant avec un contre-crochet sur le cadre, l'axe de pivotement du crochet étant perpendiculaire à l'ouvrant. Dans cette forme de réalisation, lorsque le cadre présent une structure tubulaire, on peut avantageusement envisager le contre-crochet soit une fente réalisée dans une face d'une branche latérale du cadre.

Pour réaliser un verrouillage du cadre sur la structure d'une benne, on peut prévoir que la base du cadre comporte au moins une gâche sur une face extérieure, c'est-à-dire opposée aux branches latérales.

Pour réaliser la liaison de la porte de benne pendulaire avec une structure de benne, on peut avantageusement prévoir que les extrémités libres des branches latérales présentent chacune une forme d'étrier avec deux bras reliés entre eux par un axe. L'axe peut alors venir prendre place dans un palier monté sur la structure de ladite benne.

La présente invention concerne également :
une benne, par exemple benne basculante, caractérisée en ce qu'elle comporte une porte de benne pendulaire telle que décrite précédemment. Une telle benne peut comporter un fond de forme rectangulaire, deux poteaux s'étendant perpendiculairement au fond à deux angles voisins du fond, et lesdits montants portent alors avantageusement des moyens d'articulation complémentaires des moyens définissant un axe d'articulation pour le cadre de la porte de benne pendulaire

La présente invention concerne alors aussi :
- un véhicule motorisé (camion, camionnette, "pick-up", ...), caractérisé en ce qu'il comporte une benne selon l'alinéa précédent, et
- un véhicule tracté, notamment remorque, caractérisé en ce qu'il comporte une benne telle que définie ci-dessus.

Des détails et avantages de la présente invention apparaitront mieux de la description qui suit, faite en référence au dessin schématique annexé sur lequel :
La figure 1 illustre une benne de camion selon l'invention,
La figure 2 est une vue montrant à plus grande échelle la porte arrière de la benne de la figure 1,
La figure 3 est une vue correspondant à la figure 2 selon un premier mode d'ouverture,
La figure 4 est une vue correspondant aux figures 2 et 3 selon un autre mode d'ouverture, et
La figure 5 est une vue correspondant à la figure 4, la benne étant en outre basculée.

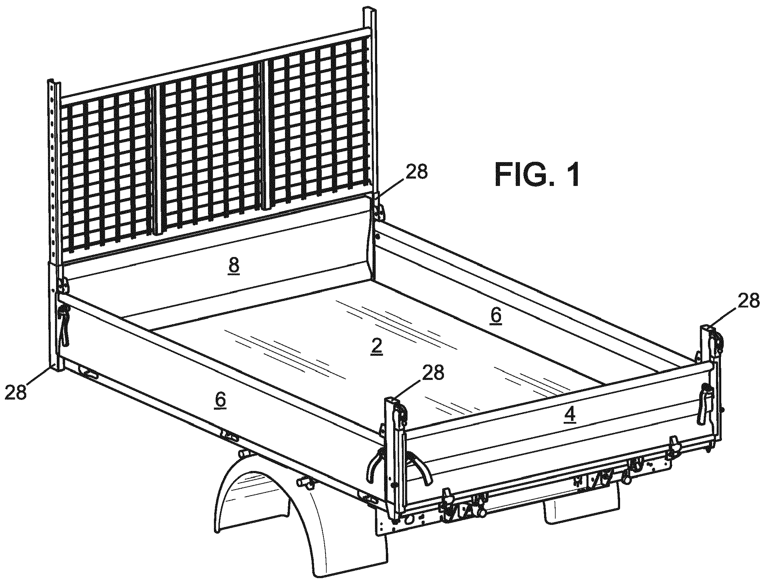

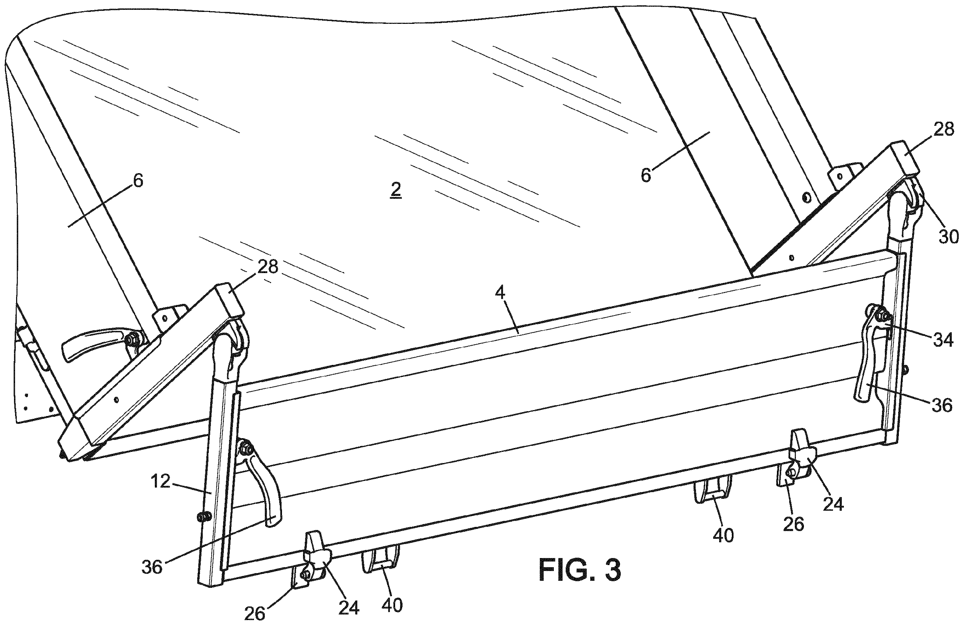

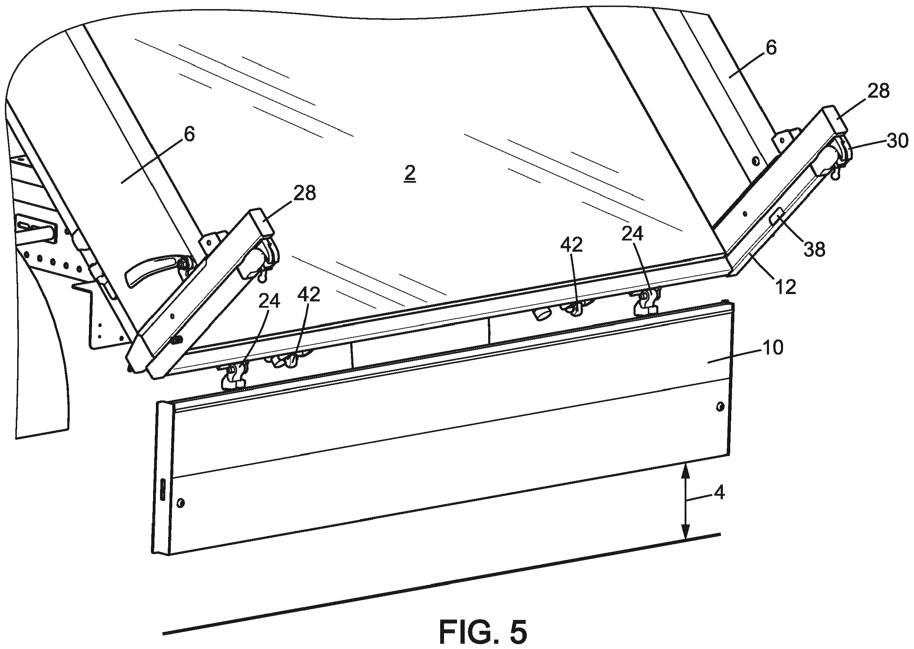

D'un premier abord, la benne illustrée sur la figure 1 ressemble à une benne "classique". Il s'agit d'une benne basculante avec un système, par exemple à vérin(s), qui n'est pas illustré ici. La position basculée de la benne est illustrée sur les figures 3 et 5.

De manière classique, la benne illustrée au dessin comporte un fond 2, une porte arrière 4, des ridelles latérales 6 et un panneau avant 8.

Le fond 2 est de forme rectangulaire sensiblement plane. Il est réalisé par exemple en tôle et est fixé sur une structure (non représentée) lui donnant une bonne rigidité. D'autres matériaux, par exemple des matériaux composites ou tout matériau apte à réaliser un plancher de chargement, peuvent aussi être envisagés pour former le fond 2. On supposera par la suite que le fond 2 est dans un plan horizontal lorsque la benne n'est pas basculée (figures 1, 2 et 4).

Les ridelles latérales 6, la porte arrière 4 et le panneau avant 8 servent à maintenir une charge posée sur le fond 2. Par rapport au sens de roulement du camion sur lequel la benne est destinée à être montée, les ridelles latérales 6 s'étendent longitudinalement tandis que la porte arrière 4 et le panneau avant 8 s'étendent transversalement. Les différents éléments, ridelles latérales 6, panneau avant 8, sont connus de l'homme du métier et ne seront donc pas décrits ici. De même, le mécanisme rendant la benne basculante est connu de l'homme du métier et n'est pas décrit. La description qui suit concerne plus particulièrement la porte arrière 4. Cette dernière peut être combinée à sensiblement tout type de ridelle latérale, de fond de benne, de mécanisme de levage, ... connus de l'art antérieur. Il est à noter que l'invention va être décrite plus loin en référence à une porte arrière mais qu'elle pourrait aussi concerner une ridelle latérale, par exemple dans le cas d'une benne pouvant pivoter sur le côté (par exemple une benne de type tri-benne).

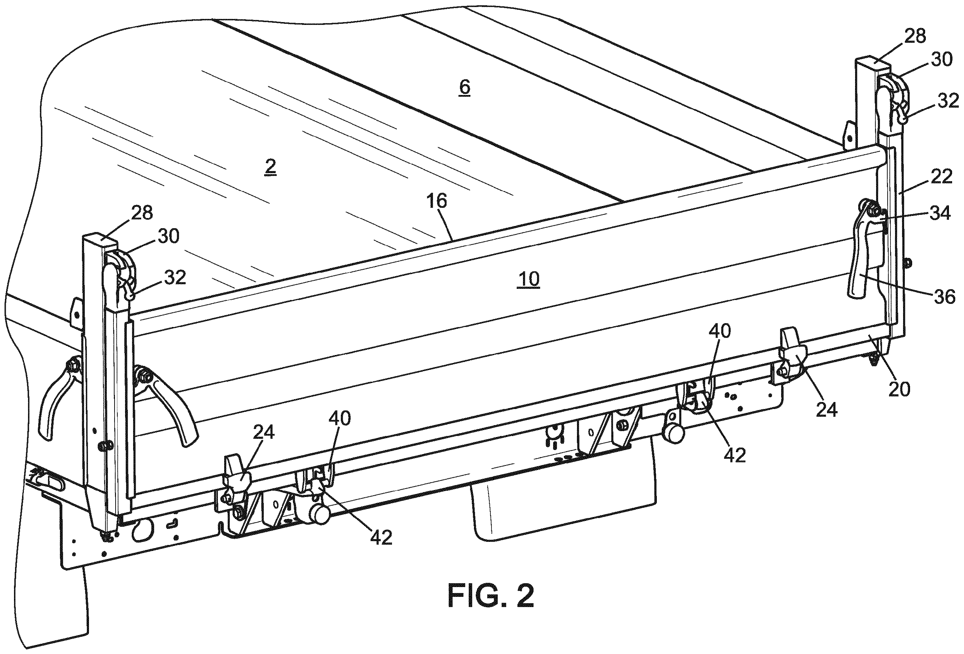

Les figures 2 à 5 montrent plus en détails la porte arrière 4 de la benne illustrée sur la figure 1. Cette porte comporte un panneau 10 et un cadre 12.

Le panneau 10 est de forme extérieure globalement rectangulaire. Il peut avoir une forme plane mais aussi, comme illustré sur le dessin, présenter des formes qui le rigidifient et/ou qui donnent un aspect esthétique.

On supposera par la suite le panneau 10 comme positionné sur les figures 1 et 2. On définit alors pour ce panneau 10 un bord inférieur 14, un bord supérieur 16 (libre) et deux (petits) bords latéraux 18.

Le cadre 12 présente quant à lui une forme globale en U. Il comporte ainsi une base 20 et deux branches latérales 22. Tous ces éléments (base et branches) sont par exemple réalisés à partir d'un tube métallique de section rectangulaire, éventuellement carrée, coupé et soudé pour former le cadre 12. Les dimensions du cadre 12 sont adaptées à celle du panneau 10 (et/ou inversement) de telle sorte que, dans la forme de réalisation illustrée sur le dessin, le panneau 10 puisse venir prendre place entre les branches latérales 22 en reposant sur la base 20.

Le panneau 10 est relié à la base 20 du cadre 12 de manière à pouvoir pivoter par rapport au cadre 12. Dans la forme de réalisation illustrée, l'articulation entre le panneau 10 et la base 20 se fait au moins une et de préférence par deux charnières 24. Pour pouvoir avoir un cadre 12 fin (et léger), une languette 26 est à chaque fois fixée (boulonnée ou soudée) sur la base 20 en s'étendant vers le bas pour porter un bras de la charnière 24. Ainsi le panneau 10 est monté pivotant par rapport à un axe de pivotement parallèle et proche (distant de quelques millimètres à quelques centimètres) du bord inférieur 14 du panneau 10.

Le cadre 12 est quant à lui monté pivotant sur la benne. À cet effet, il est muni de premiers moyens d'articulation et la benne est munie quant à elle de seconds moyens d'articulation complémentaires auxdits premiers moyens d'articulation. Ici, dans la forme de réalisation illustrée, les premiers moyens d'articulation sont formés de deux axes qui viennent coopérer avec des paliers formant les seconds moyens d'articulation montés sur la structure de la benne. Dans ce cas de figure, on a ainsi des éléments mâles sur la porte arrière 4 et des éléments femelles sur la benne. L'inverse est tout à fait envisageable également.

Comme on peut mieux le voir sur la figure 1, la structure de la benne comporte quatre poteaux 28 disposés chacun à un angle du fond 2 et s'étendant verticalement vers le haut. Ces poteaux 28, par exemple tubulaires métalliques de section rectangulaire, éventuellement carrée, servent de support pour retenir les ridelles latérales 6, le panneau avant 8 et la porte arrière 4.

Pour le montage de la porte arrière 4 sur la benne, les deux poteaux 28 disposés de part et d'autre de la porte arrière 4 sont chacun munis d'un palier double 30, monté sur la partie haute des poteaux 28 correspondants. Les deux paliers doubles 30 sont disposés à égale distance du fond 2 de la benne de manière à définir un axe d'articulation parallèle au fond 2 de la benne.

Les extrémités libres des branches latérales 22 du cadre 12, c'est-à-dire les extrémités de ces branches latérales 22 opposées à la base 20, portent les premiers moyens d'articulation qui se présentent sous la forme d'un étrier (renversé). Les extrémités libres se dédoublent pour former deux bras sensiblement parallèles reliés par un axe. Les deux axes (un par branche latérale 22) sont alignés de manière à définir un axe d'articulation.

Pour le montage de la porte arrière 4 sur la benne, chaque axe se trouvant à une extrémité d'une branche latérale 22 du cadre 12 vient prendre place dans un palier double 30. Les deux bras de l'étrier correspondant viennent alors de part et d'autre de ce palier double 30. Pour sécuriser l'axe de l'étrier dans le palier double 30, un verrou circulaire est guidé entre les deux paliers du palier double 30 et peut prendre une position ouverte laissant libre accès au logement dans les paliers du palier double 30 ainsi qu'une position fermée qui permet d'emprisonner l'axe dans ses logements du palier double 30. Un levier 32 est utilisé pour commander le verrou circulaire. Avantageusement, il sera prévu que lorsque le verrou circulaire est dans sa position verrouillée, le levier 32 vient prendre place entre les bras de l'étrier se trouvant à l'extrémité libre des branches latérales 22.

Des moyens de verrouillage sont aussi associés à la porte arrière 4. On trouve, d'une part, un verrouillage du panneau 10 sur le cadre 12 et, d'autre part, un verrouillage du cadre 12 par rapport à la structure de la benne.

Le verrouillage du panneau 10 est réalisé à l'aide de deux crochets 34 montés pivotants sur le panneau 10. L'axe de pivotement est sensiblement perpendiculaire au panneau 10, c'est-à-dire sensiblement horizontal. En position fermée du panneau 10, c'est-à-dire que le panneau se trouve entre les deux branches latérales 22 du cadre 12, les crochets 34, qui sont associés à un levier de commande 36, se trouvent chacun face à une branche latérale 22. Ils sont disposés de telle sorte que dans une première position pivotée, le crochet 34 est au moins partiellement à l'intérieur de la branche latérale 22 correspondante après être passé dans une fente 38 réalisée dans une face intérieure de ladite branche latérale 22. Dans une autre position, pivotée par rapport à la première position, le crochet 34 est entièrement sorti hors de la branche latérale 22 correspondante.

Le verrouillage du cadre sur la structure de la benne est réalisé par encliquetage d'au moins une gâche 40 dans un crochet de fermeture 42.

Comme visible notamment sur la figure 2, une gâche 40 (il y en a deux dans la forme de réalisation illustrée mais une seule pourrait également remplir la fonction) est fixée sous la base 20 du cadre 12. Chaque gâche 40 est destinée à coopérer avec un crochet de fermeture 42 monté sur la structure de la benne. Lorsque la porte arrière 4 est en position fermée, c'est-à-dire que les branches latérales 22 du cadre 12 reposent contre les poteaux 28 correspondants, le crochet de fermeture 42 peut prendre une position verrouillée dans laquelle il engrène avec la gâche 40 ou bien prendre une position déverrouillée dans laquelle il n'engrène pas avec la gâche 40. Les deux positions du crochet de fermeture 42 sont stables, par exemple grâce à un ressort (non illustré) rappelant le crochet de fermeture dans la position déverrouillée.

La figure 2 illustre la porte arrière 4 en position fermée. Le panneau 10 est verrouillé dans son cadre 12 et le cadre est verrouillé sur la benne. Les crochets 34 sont passés dans les fentes 38 et se trouvent au moins partiellement à l'intérieur des branches latérales 22 du cadre 12. En outre, les crochets de fermeture 42 sont en prise avec les gâches 40. Ceci correspond par exemple à une position de transport lorsque le camion correspondant roule sur une route.

La figure 3 illustre la benne dans une position basculée. On peut supposer ici que la benne transportait par exemple du sable. Le sable doit être déchargé. Un opérateur vient alors déverrouiller le cadre 12 en plaçant les crochets de fermeture 42 dans leur position déverrouillée. Selon une variante de réalisation, les crochets utilisés pour le verrouillage / déverrouillage peuvent être conçus pour permettre leur déverrouillage automatique ou mécanique. Dès que le basculement commence, du fait de la gravité, la porte arrière tend alors à rester à la verticale. Une ouverture grandissant au fur et à mesure que l'inclinaison de la benne augmente apparait entre le fond 2 de la benne et la porte arrière 4. Le sable (ou tout autre matériau) peut alors se déverser par cette ouverture.

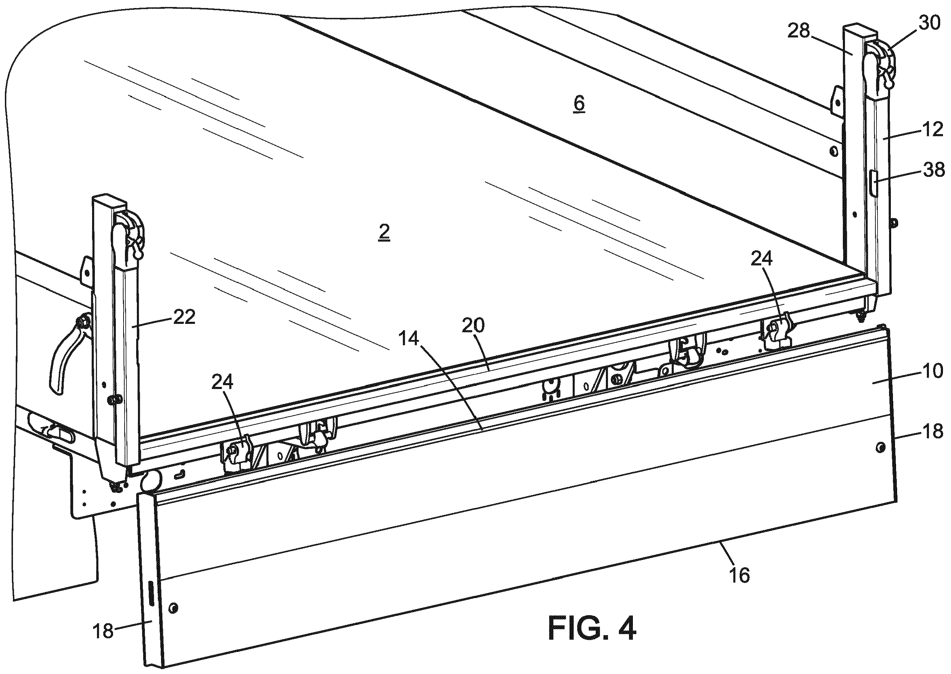

Dans le cas de la figure 4, le cadre 12 reste verrouillé sur la structure de la benne et seul le panneau 10 s'ouvre. Les crochets 34 sont déverrouillés à l'aide des leviers de commande 36. La porte arrière 4 s'ouvre alors vers le bas par pivotement autour des charnières 24. Cette position ouverte peut par exemple être utilisée pour le déchargement d'une palette hors de la benne.

Le cas de figure illustré sur la figure 5 correspond au cas de figure de la figure 4 avec une benne basculée. Dans ce cas, après avoir par exemple déchargé une palette, un matériau brut doit être déversé. Il n'est pas nécessaire ici de retirer le panneau 10 comme c'est souvent le cas avec des portes de l'art antérieur car il est prévu de conserver une garde au sol 44 suffisante pour que le panneau 10 ne vienne pas heurter le sol. En effet, la solution proposée permet d'avoir un panneau 10 de taille réduite, d'une part, et l'axe de rotation de ce panneau 10 est rehaussé du fait de la structure de la porte par rapport à une porte arrière classique de benne.

La porte arrière décrite ci-dessus, ainsi que la benne intégrant une telle porte, présentent plusieurs avantages.

La structure proposée est ainsi compacte. Son encombrement est sensiblement le même que celui d'une porte pendulaire ou qu'une porte s'ouvrant en se rabattant vers le bas tout en proposant ces deux modes d'ouverture.

Une porte -arrière- telle que proposée peut s'adapter sur quasiment toutes les formes de bennes. Elle peut en outre être mise en oeuvre pour une porte arrière ou bien pour une ridelle latérale.

Une porte arrière, ou latérale, telle que décrite ci-dessus peut aussi être mise en oeuvre pour quasiment tout type de benne : benne basculant vers l'arrière, benne basculant latéralement, tri-benne, benne amovible, benne déposable, ....

Le fonctionnement de la porte est simple et ne change pas les habitudes d'un utilisateur. Les moyens de verrouillage décrits sont connus de la plupart des utilisateurs de benne ce qui rend l'utilisation de la benne plutôt intuitif.

Bien entendu, la présente invention ne se limite pas à la forme de réalisation préférée décrite ci-dessus en référence au dessin schématique annexé et aux variantes évoquées mais concerne également les autres formes de réalisation à la portée de l'homme du métier dans le cadre des revendications ci-après.

## Revendications

1. Porte (4) de benne pendulaire, **caractérisée en ce qu'**elle comporte :
- un cadre (12) en forme de U avec une base (20) et deux branches latérales (22),
- des moyens de type axe ou palier définissant un axe d'articulation pour le cadre (12),
- un ouvrant (10) monté articulé pivotant sur la base (20) du cadre (12), et
- des moyens de verrouillage (34) de l'ouvrant (10) sur le cadre (12).

2. Porte (4) de benne pendulaire selon la revendication 1, **caractérisée en ce que** le cadre (12) est un cadre tubulaire.

3. Porte (4) de benne pendulaire selon l'une des revendications 1 ou 2, **caractérisée en ce que** les moyens définissant un axe d'articulation sont fixés sur les branches latérales (22) du cadre (12).

4. Porte (4) de benne pendulaire selon la revendication 3, **caractérisée en ce que** les moyens définissant un axe d'articulation sont disposés aux extrémités libres des branches latérales (22) du cadre (12).

5. Porte (4) de benne pendulaire selon l'une des revendications 1 à 4, **caractérisée en ce que** l'ouvrant (10) est articulé sur la base (20) du cadre par au moins une, et de préférence deux, charnière(s) (24).

6. Porte (4) de benne pendulaire selon l'une des revendications 1 à 5, **caractérisée en ce que** les moyens de verrouillage comportent au moins un crochet (34) monté pivotant sur l'ouvrant (10) et coopérant avec un contre-crochet (38) sur le cadre (12), l'axe de pivotement du crochet (34) étant perpendiculaire à l'ouvrant (10).

7. Porte (4) de benne pendulaire selon les revendications 2 et 6, **caractérisée en ce que** le contre-crochet est une fente (38) réalisée dans une face d'une branche latérale (22) du cadre.

8. Porte (4) de benne pendulaire selon l'une des revendications 1 à 6, **caractérisée en ce que** la base (20) du cadre comporte au moins une gâche (40) sur une face extérieure, c'est-à-dire opposée aux branches latérales (22).

9. Porte (4) de benne pendulaire selon l'une des revendications 1 à 8, **caractérisée en ce que** les extrémités libres des branches latérales (22) présentent chacune une forme d'étrier avec deux bras reliés entre eux par un axe.

10. Benne, **caractérisée en ce qu'**elle comporte une porte (4) de benne pendulaire selon l'une des revendications 1 à 9.

11. Benne selon la revendication 10, **caractérisée en ce qu'**elle comporte un fond (2) de forme rectangulaire, **en ce que** deux poteaux (28) s'étendent perpendiculairement au fond à deux angles voisins du fond, et **en ce que** lesdits montants portent des moyens d'articulation complémentaires des moyens définissant un axe d'articulation pour le cadre (12) de la porte (4) de benne pendulaire.

12. Véhicule motorisé, **caractérisé en ce qu'**il comporte une benne selon la revendication 10 ou 11.

13. Véhicule tracté, **caractérisé en ce qu'**il comporte une benne selon la revendication 10 ou 11.
